(19) Europäisches Patentamt
European Patent Office
Office européen des brevets

(11) Numéro de publication : **0 025 560**
**B1**

(12) # FASCICULE DE BREVET EUROPÉEN

(45) Date de publication du fascicule du brevet : **13.07.83**

(51) Int. Cl.³ : **H 01 M 4/58**, H 01 M 10/36, H 01 M 6/14, C 01 G 1/12

(21) Numéro de dépôt : **80105265.5**

(22) Date de dépôt : **04.09.80**

(54) **Générateur électrochimique à électrolyte non aqueux.**

(30) Priorité : **11.09.79 FR 7922644**

(43) Date de publication de la demande : **25.03.81 Bulletin 81/12**

(45) Mention de la délivrance du brevet : **13.07.83 Bulletin 83/28**

(84) Etats contractants désignés : **AT BE CH DE FR GB IT LI LU NL SE**

(56) Documents cités :
**FR A 2 168 866**
**FR A 2 277 898**
**FR A 2 381 395**

**CHEMICAL ABSTRACTS, vol. 89, no. 6, 7 août 1978, page 144, abrégé 46261B Columbus, Ohio, US J.O. BESENHARD : « Chalcogenides of arsenic, antimony and bismuth as positive electrodes in lithium batteries »**

**COLLECTION CZECHOSLOV CHEM. COMMUN., vol. 33, no. 3, 1968 M. FRUMAR et al. : « Synthese und einige physikalische Eigenschaften des Blei (II) — Tetrathiodiantimonats (III), pages 683-690**

(73) Titulaire : **COMPAGNIE GENERALE D'ELECTRICITE Société anonyme dite:**
**54, rue La Boétie**
**F-75382 Paris Cedex 08 (FR)**

(72) Inventeur : **Brec, Raymond**
**6, avenue de la Close**
**F-44300 Nantes (FR)**
Inventeur : **Le Mehaute, Alain**
**69, rue Juliette Adam**
**F-91190 Gif sur Yvette (FR)**
Inventeur : **Dugast, Alain**
**25, rue de la Saulzinière**
**F-44000 Nantes (FR)**

(74) Mandataire : **Weinmiller, Jürgen et al**
**Zeppelinstrasse 63**
**D-8000 München 80 (DE)**

**EP 0 025 560 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

# Générateur électrochimique à électrolyte non aqueux

La présente invention a pour objet un générateur électrochimique à électrolyte non aqueux du type primaire ou secondaire, donc éventuellement rechargeable, dont l'électrode négative comporte au moins un métal alcalin, l'électrode positive comportant un composé actif de structure en couches.

Un certain nombre d'études ont été développées au cours des dernières années sur des cellules électrochimiques à densité d'énergie élevée mettant en œuvre à l'électrode positive des composés d'insertion dans lesquels s'insère au cours de la charge, la matière active négative constituée par un métal alcalin, notamment du lithium. De telles cellules sont décrites en particulier dans le document FR-A 2 381 395.

On a par ailleurs préconisé l'utilisation de l'oxyde de bismuth $Bi_2O_3$ comme décrit dans « J. Électrochemi. Soc. 1978, vol. 124 n° 1 p. 14 » ainsi que des composés tels que $Pb_2Bi_2O_5$ et $Pb\,Bi_2O_4$ comme publié dans « Proceeding of the 11e International Power Sources Symposium n° 7, Brighton 1978 Academic Press p. 623 » en tant que matière active positive. On a en outre proposé l'utilisation de $Sb_2S_3$ ou de $Sb_2Se_3$ (voir le document FR-A 2 168 866) et de $Bi_2S_3$ ou de $Bi_2Se_3$ pour des piles au lithium (voir Chem. Abstr. Vol. 89, 1978, p. 144 abstract Nr. 46216b).

Cependant de tels composés qui permettent d'obtenir des densités d'énergie élevées ne sont pas aptes à élaborer des générateurs électrochimiques secondaires donc rechargeables.

La présente invention permet de remédier à de tels inconvénients et elle a pour but un générateur électrochimique présentant une densité d'énergie très élevée et pouvant en outre subir un grand nombre de cycles de charge et de décharge. En outre le coût de réalisation d'un tel générateur doit être peu élevé.

L'invention a pour objet un générateur électrochimique primaire ou secondaire comportant une électrode positive dont la matière active est apte à intercaler la matière active négative, et une électrode négative dont la matière active comporte au moins un métal alcalin en contact avec un électrolyte non aqueux, caractérisé par le fait que ladite électrode positive comporte un composé actif défini ou une solution solide de formule générale $M_xX, R_yX_3$ dans laquelle M représente un élément choisi parmi le plomb et l'étain, R représente un élément choisi parmi le bismuth et l'antimoine, X représente un élément choisi parmi le soufre et le sélenium, x et y étant supérieurs à zéro et pouvant atteindre au maximum x = 1 et y = 2.

L'invention sera expliquée ci-après à l'aide d'exemples préférés de mise en œuvre en référence aux dessins et diagrammes annexés dans lesquels :

La figure 1 représente un générateur du type « bouton » selon l'invention.

Les figures 2 et 3 sont des diagrammes illustrant les performances électriques de générateurs selon l'invention.

Conformément à l'invention un générateur électrochimique comporte les composants principaux suivants :

## Electrode positive

Elle comprend comme matière active un composé dont la formule générale est la suivante :

$$M_xX, R_yX_3$$

Dans cette formule :

M représente un élément choisi parmi le plomb et l'étain,

R représente un élément choisi parmi le bismuth et l'antimoine,

X est un élément choisi parmi le soufre et le sélénium,

x et y étant supérieurs à zéro et pouvant atteindre au maximum x = 1 et y = 2.

A titre d'exemple un tel composé est $PbBi_2S_4$ ou $SnBi_2S_4$.

Une telle matière active peut être utilisée seule si elle est suffisamment conductrice ou dans le cas contraire associée à des supports électroniquement conducteurs tels que le carbone, le cuivre, le nickel, le zinc, l'argent et autres, un liant tel que le polytétrafluoréthylène pouvant être utilisé pour consolider la structure.

Ladite matière active est déposée sur le support ou forme une texture poreuse par compression sur un collecteur.

Ladite matière active peut également être mélangée à une poudre conductrice telle que le carbone, le graphite ou leurs mélanges.

Généralement la matière active positive présente une structure en couches développées à partir du groupe spatial de Schoenflyes. Ces couches sont liées entre elles par des forces de van der Waals. Les couches individuelles forment au moins une feuille contenant des atomes métalliques disposée entre des feuilles d'atomes non métalliques. Les réactions d'insertion et de désinsertion ont lieu entre les couches et sont rendus possibles par la faiblesse desdites forces de van der Waals.

La vitesse d'insertion et de désinsertion qui correspond à la charge et à la décharge dans le générateur est considérée comme un facteur important pour la détermination d'une polarisation notable

de concentration éventuelle à l'électrode pendant les processus électrochimiques en présence des composés utilisés comme matières positives actives.

Le tableau ci-dessous donne quelques paramètres d'un composé actif selon l'invention soit Pb $Bi_2S_4$, comparé à des composés déjà connus :

| | d | m (g) | F/mole primaire | Ah/kg | E (volts) | Wh/kg | Wh/dm³ |
|---|---|---|---|---|---|---|---|
| $Bi_2S_3$ | 7,39 | 513,96 | 6 | 313,5 | 1,7 | 532,9 | 3 938 |
| $PbBi_2S_4$ | 7,3 | 753,15 | 8 | 284,7 | 1,6 | 455,5 | 3 325 |
| PbS | 7,5 | 239,25 | 2 | 224 | 1,5 | 336 | 2 520 |

Dans ce tableau :
d représente la densité
m(g) représente la masse molaire
F/mole primaire représente le nombre de Faradays
Ah/kg représente la capacité spécifique théorique
E (volts) représente la tension initiale par rapport au lithium
Wh/kg représente l'énergie spécifique par unité de poids
$Wh/dm^3$ représente l'énergie spécifique par unité de volume.

Electrode négative

Elle comporte au moins un métal alcalin.

Ce métal peut être utilisé seul, déposé sur un support électroniquement conducteur confectionné par exemple en cuivre, en acier en nickel, en carbone ou autres.

On peut également utiliser un alliage dudit métal sous réserve que l'alliage soit électroniquement conducteur et apte à libérer électrochimiquement des ions qui réagissent avec la matière active positive.

A titre d'exemple, l'électrode négative peut être formée d'un alliage de lithium et d'aluminium qui réduit le taux de formation et de croissance de dendrites au cours de la charge.

Electrolyte

Il comporte d'une part un solvant inerte chimiquement vis-à-vis des électrodes tout en permettant la migration des ions vers les électrodes et d'autre part un sel ionisable dissous dans ledit solvant. Un tel sel présente la formule générale suivante :

$$L\,Z$$

dans laquelle
L est un cation choisi parmi les ions des métaux alcalins
Z est au moins un anion choisi parmi les halogénures, les sulfates, les nitrates, les phosphofluorures, les thiocyanates, les perchlorates, les hexafluorophosphates, les hydroborures.

Des sels particulièrement avantageux sont le perchlorate, l'hexafluorophosphate, et le thiocyanate de lithium, l'iodure et l'hexafluoroarseniure d'ammonium, l'acide chlorhydrique, le thiocyanate ou le chlorure de potassium, le chlorure de magnésium.

Les solvants mis en œuvre sont des composés organiques polaires tels qu'un ester, un éther, un carbonate organique, une lactone organique, un amide, un sulfoxyde.

De tels solvants peuvent être utilisés soit seuls, soit en mélange. La concentration du sel ionisable dans le solvant est déterminée par sa conductivité et par sa réactivité chimique. En général des concentrations comprises entre 0,1 et 5 moles par litre sont mises en œuvre.

On notera de plus que des électrolytes solides, tels que l'alumine bêta peuvent être utilisés. De même des halogénures alcalins à l'état fondu conviennent également.

On va donner maintenant en référence à la figure 1 un mode de réalisation pratique d'un générateur électrochimique selon l'invention, du type « bouton ».

Sur la figure 1, on a représenté un générateur de type bouton avec une matière active négative 1, une matière active positive 2 et un séparateur poreux 3 imprégné d'électrolyte. Les composants actifs sont enfermés dans un boîtier constitué de deux coupelles 4 et 5 qui servent de collecteurs positif et négatif.

La matière active positive 2 est comprimée sous une force de 800 kg dans la coupelle 4 et cela en atmosphère d'azote sec.

La matière active négative 1, est comprimée dans la coupelle 5 sous argon. Un séparateur 3 est du type cellulosique et il est imprégné d'électrolyte. Après sertissage le générateur ainsi constitué est déchargé sous 500 μA, puis rechargé à la même intensité.

On va donner maintenant quelques exemples de générateurs.

1er exemple

On prépare le composé $PbBi_2S_4$ par chauffage d'un mélange de PbS et de $Bi_2S_3$ à 700 °C environ pendant 2 semaines. On fait réagir sur ce corps une solution de butyl-lithium 1,5 M dans l'hexane, et par analyse on vérifie que du lithium a été inséré dans ledit composé. On comprime donc 500 mg de ce corps dans la coupelle 4 pour réaliser un générateur bouton tel que décrit dans ce qui précède, mais monté à l'état déchargé. La capacité de ce générateur après charge est de 100 mAh rechargeables.

2ème exemple

On prépare le composé Pb $Bi_2S_4$ par chauffage d'un mélange de PbS et $Bi_2S_3$ à 700 °C environ pendant 1 semaine. Le composé est alors mélangé avec 15 % en poids d'un mélange de graphite et de noir d'acétylène en proportions respectives de 70 et 30 %. On réalise ensuite avec ce composé un générateur tel que décrit figure 1 en utilisant comme électrolyte une solution bimolaire de Li Cl $O_4$ dans le dioxolanne. La capacité équivalente d'un tel générateur est de 90 mAh pour une surface de cathode de 1,2 $cm^2$ et 1,6 mm d'épaisseur.

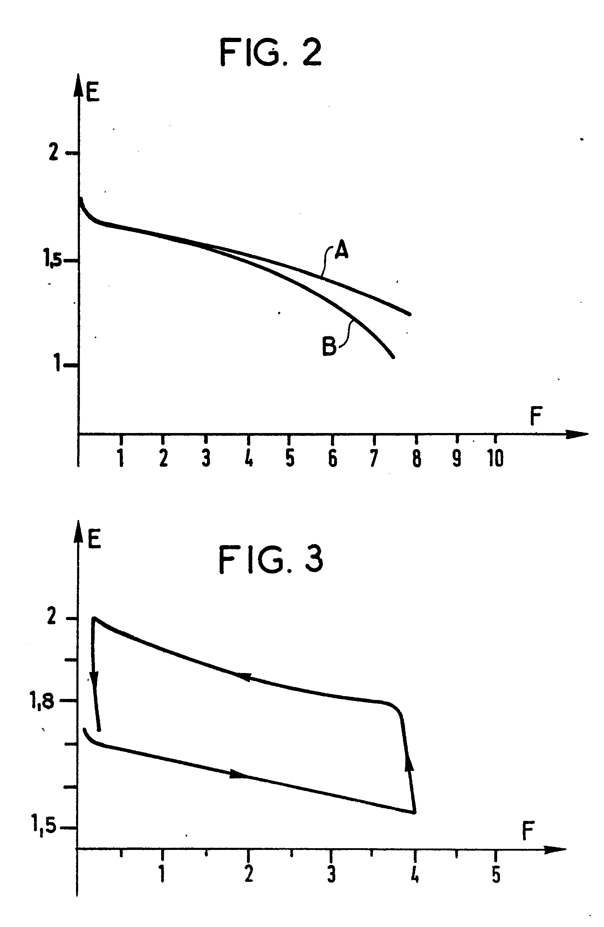

On a représenté figure 2 la courbe de décharge de ce générateur sous une intensité de 200 µA (courbe A) et 500 µA (courbe B). On a porté en abscisse la tension E en volts en fonction du nombre de F/mole.

On a représenté figure 3 la courbe de cyclage d'un tel générateur à savoir la tension E en volts en fonction du nombre de F/mole.

Un tel générateur présente une énergie massique voisine de 500 Wh/kg et réversible.

L'invention est avantageusement mise en œuvre dans les générateurs électrochimiques rechargeables ou non pour montres et pacemakers.

**Revendications**

1. Générateur électrochimique primaire ou secondaire comportant une électrode positive dont la matière active (2) est apte à intercaler la matière active négative (1), et une électrode négative dont la matière active (1) comporte au moins un métal alcalin en contact avec un électrolyte non aqueux, caractérisé par le fait que ladite électrode positive comporte un composé actif défini ou une solution solide de formule générale $M_xX$, $R_yX_3$ dans laquelle :
M représente un élément choisi parmi le plomb et l'étain,
R représente un élément choisi parmi le bismuth et l'antimoine,
X représente un élément choisi parmi le soufre et le sélénium,
x et y étant supérieures à 0 et pouvant atteindre au maximum x = 1 et y = 2 respectivement.

2. Générateur selon la revendication 1, caractérisé par le fait que ledit composé actif est choisi dans le groupe comportant $PbBi_4S_4$ et $SnBi_2S_4$.

3. Générateur selon l'une des revendications 1 et 2, caractérisé par le fait que ledit composé est associé à un support électroniquement conducteur.

4. Générateur selon l'une des revendications 1 et 2, caractérisé par le fait que ledit composé est mélangé à une poudre conductrice comportant un corps choisi parmi le noir d'acétylène, le graphite ou leurs mélanges.

5. Générateur selon l'une des revendications 1 à 4, caractérisé par le fait que ledit électrolyte comporte au moins un sel ionisable dissous dans un solvant en proportion comprise entre 0,1 à 5 moles par litre.

6. Générateur selon la revendication 5, caractérisé que le fait que ledit sel ionisable à pour formule générale LZ dans laquelle L représente un cation choisi parmi les ions des métaux alcalins, Z représentant un anion choisi parmi les halogénures, les sulfates, les nitrates, les phosphofluorures, les thiocyanates, les perchlorates, les hexafluorophosphates, les hydroborures.

7. Générateur selon l'une des revendications 5 et 6, caractérisé par le fait que ledit solvant comporte un composé organique choisi parmi les esters, les ethers, les carbonates organiques, les lactones organiques, les amides, les sulfoxydes et leurs mélanges.

8. Générateur selon l'une des revendications 1 à 3, caractérisé par le fait que ledit électrolyte (3) est une électrolyte solide, notamment l'alumine bêta adaptée au métal de l'électrode négative.

9. Générateur selon l'une des revendications 1 à 3, caractérisé par le fait que ledit électrolyte (3) est un sel fondu, notamment, un ou plusieurs halogénures alcalins.

**Claims**

1. A primary or secondary electrochemical generator comprising a positive electrode the active

material (2) of which can migrate into the active negative material (1) and a negative electrode the active material (1) of which comprises at least an alkali metal in contact with a non aqueous electrolyte, characterized in that said positive electrode comprises a defined active compound or a solid solution whose general formula is $M_xX$, $R_yX_3$, in which :

M represents an element chosen from lead and tin,

R represents an element chosen from bismuth and antimony,

X represents an element chosen from sulphur and selenium,

x and y being superior to 0 and being able to reach a maximum of x = 1 and y = 2 respectively.

2. A generator according to claim 1, characterized in that said active compound is chosen from the group comprising $PbBi_2S_4$ and $SnBi_2S_4$.

3. A generator according to one of the claims 1 and 2, characterized in that said compound is associated to an electronically conductive support.

4. A generator according to one of the claims 1 and 2, characterized in that said compound is mixed with a conductive powder comprising a substance chosen from acetylene black, graphite or mixtures thereof.

5. A generator according to one of the claims 1 to 4, characterized in that said electrolyte comprises at least one ionisable salt dissolved in a solvent in a concentration lying between 0,1 and 5 moles per liter.

6. A generator according to claim 5, characterized in that said ionisable salt has a general formula of LZ, wherein L is a cation chosen from the ions of alkali metals, Z is an anion chosen from the halides, sulphates, nitrates, phosphofluorides, thiocyanates, perchlorates, hexafluorophosphates, hydroborides.

7. a generator according to one of the claims 5 and 6, characterized in that said solvent comprises an organic compound chosen from the esters, ethers, organic carbonates, organic lactones, amides, sulfoxides and mixtures thereof.

8. A generator according to one of the claims 1 to 3, characterized in that said electrolyte (3) is a solid electrolyte, particularly beta alumina fitted to the metal of the negative electrode.

9. A generator according to one of the claims 1 to 3, characterized in that said electrolyte (3) is a molten salt, particulary one or more alkali halides.

## Ansprüche

1. Primärer oder sekundärer elektrochemischer Generator, der eine positive Elektrode, deren aktives Material (2) sich zwischen das negative aktive Material (1) einfügen kann, und eine negative Elektrode aufweist, deren aktives Material (1) mindestens ein Alkalimetall in Kontakt mit einem nicht-wässrigen Elektrolyten aufweist, dadruch gekennzeichnet, daß die positive Elektrode einen bestimmten aktiven Stoff oder eine feste Lösung der allgemeinen Formel $M_xX$, $R_yX_3$ aufweist, in der :

M ein aus Blei und Zinn ausgewähltes Element darstellt,

R ein aus Wismuth und Antimon ausgewähltes Element darstellt,

X ein aus Schwefel und Selen ausgewähltes Element darstellt,

wobei x und y größer als 0 sind und im Höchstfall x = 1 und y = 2 erreichen können.

2. Generator nach Anspruch 1, dadurch gekennzeichnet, daß der aktive Stoff aus der Gruppe ausgewählt wird, die $PbBi_2S_4$ und $SnBi_2S_4$ enthält.

3. Generator nach einem der Ansprüche 1 und 2, dadurch gekennzeichnet, daß der Stoff einem elektronisch leitenden Träger zugeordnet ist.

4. Generator nach einem der Ansprüche 1 und 2, dadurch gekennzeichnet, daß der Stoff mit einem leitenden Puder vermischt wird, das eine Substanz aufweist, die aus Azetylenruß, Graphit oder ihren Mischungen ausgewählt wird.

5. Generator nach einem der Ansprüche 1 bis 4, dadurch gekennzeichnet, daß der Elektrolyt mindestens ein ionisierbares Salz aufweist, das in einem Lösungsmittel im Verhältnis von zwischen 0,1 und 5 Mol pro Liter aufgelöst ist.

6. Generator nach Anspruch 5, dadurch gekennzeichnet, daß das ionisierbare Salz die allgemeine Formel LZ hat, in der L ein aus den Ionen der Alkalimetalle ausgewähltes Kation darstellt, Z ein aus den Halogeniden, Sulfaten, Nitraten, Phosphofluoriden, Thiozyanaten, Perchloraten, Hexafluorophosphaten, Hydroboriden ausgewähltes Anion ist.

7. Generator nach einem der Ansprüche 5 und 6, dadurch gekennzeichnet, daß das Lösungsmittel einen organischen Stoff aufweist, der aus der Gruppe ausgewählt wird, die aus den Estern, den Äthern, den organischen Karbonaten, den organischen Lactonen, den Amiden, Sulfoxiden und und ihren Mischungen besteht.

8. Generator nach einem der Ansprüche 1 bis 3, dadurch gekennzeichnet, daß der Elektrolyt (3) ein fester Elektrolyt ist, insbesondere Beta-Alumin, das an das Metall der negativen Elektrode angepaßt ist.

9. Generator nach einem der Ansprüche 1 bis 3, dadurch gekennzeichnet, daß der Elektrolyt (3) ein geschmolzenes Salz ist, insbesondere ein oder mehrere alkaline Halogenide.

FIG.1

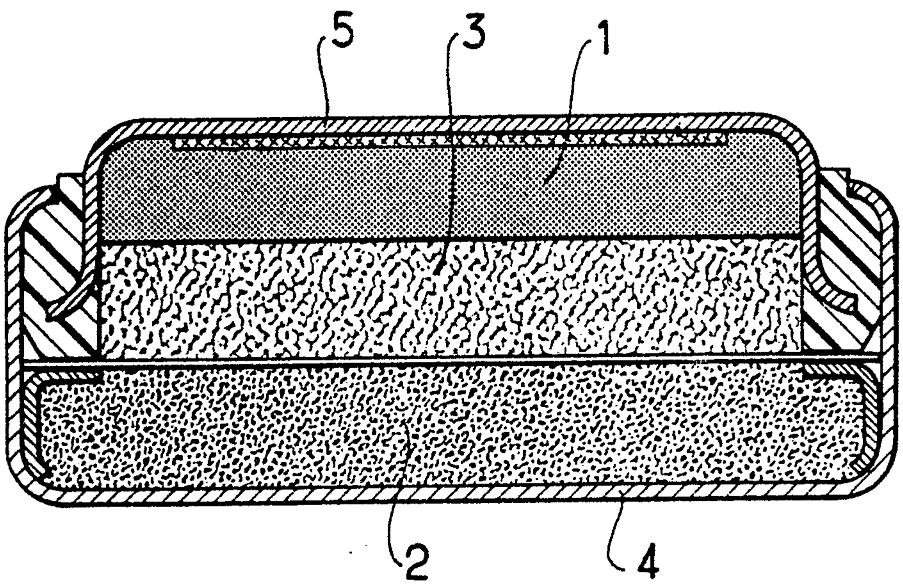

FIG. 2

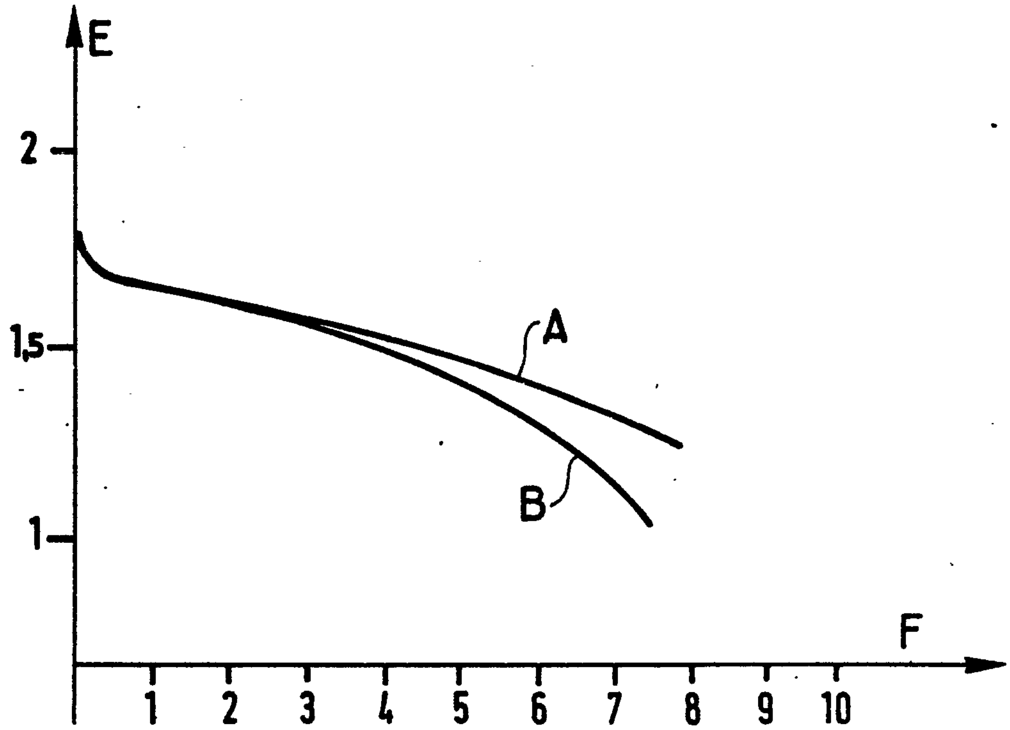


FIG. 3